# EUROPÄISCHE PATENTSCHRIFT

(11) **EP 1 919 775 B1**
(45) Veröffentlichungstag und Bekanntmachung des Hinweises auf die Patenterteilung: **03.03.2010**
(21) Anmeldenummer: 06776966.1
(22) Anmeldetag: 18.08.2006
(51) Int. Cl.: B64D 11/06

(54) **ANORDNUNG ZUM SITZEN UND LIEGEN**
SEATING AND LYING ARRANGEMENT
DISPOSITIF DE SIEGE ET DE COUCHAGE

(30) Priorität: 31.08.2005 EP 05018937
(43) Veröffentlichungstag der Anmeldung: 14.05.2008
(73) Patentinhaber: Lufthansa Technik AG, 22335 Hamburg (DE)
(72) Erfinder: MERENSKY, Harald, 22359 Hamburg (DE)
(74) Vertreter: Glawe, Delfs, Moll
(86) Internationale Anmeldenummer: PCT/EP2006/008173
(87) Internationale Veröffentlichungsnummer: WO 2007/025655

(56) Entgegenhaltungen:
- EP-A- 1 172 252
- CH-A- 248 372
- NL-A- 8 401 599
- US-A- 3 675 965
- US-A1- 2005 067 870

## Beschreibung

Die Erfindung betrifft eine insbesondere für den Passagierbereich von Flugzeugen bestimmte Anordnung zum Sitzen und zum Liegen. Die Anordnung ist in einen Sitzzustand und einen Liegezustand bringbar. Im Sitzzustand umfasst die Anordnung eine Sitzfläche und eine Lehne, im Liegezustand weist sie eine Liegefläche auf.

Vor allem bei Langstreckenflügen wird es von Passagieren als angenehm empfunden, wenn sie an ihrem Platz nach eigener Wahl entweder sitzen oder liegen können. Bekannt ist es, Flugzeuge zu diesem Zweck mit kombinierten Sitz- und Liegeeinrichtungen auszustatten. Im Sitzzustand kann der Passagier auf der Sitzfläche sitzen und sich mit dem Rücken an der Lehne anlehnen. Um die kombinierte Einrichtung vom Sitzzustand in den Liegezustand zu bringen, wird die Lehne in die Ebene der Sitzfläche geschwenkt, so dass eine annähernd ebene Liegefläche entsteht.

Ein Nachteil solcher kombinierter Sitz- und Liegeeinrichtungen besteht darin, dass sowohl im Sitzzustand als auch im Liegezustand Kompromisse hingenommen werden müssen. Damit im Liegezustand eine annähernd ebene Fläche entsteht, können die Sitzfläche und die Lehne nicht so konturiert werden, wie es für ein bequemes Sitzen optimal wäre. Im Liegezustand ist die Liegefläche nicht breiter als die Breite des Sitzes und damit für ein komfortables Liegen zu schmal. Zudem schränken die auch im Liegezustand nicht vollständig verschwindenden Übergänge zwischen den im Sitzzustand die Sitzfläche und die Lehne bildenden Teilen den Liegekomfort ein.

Das Dokument CH 248372 zeigt eine Anordnung mit allen Merkmalen des Oberbegriffs des Anspruchs 1.

Der Erfindung liegt die Aufgabe zugrunde, eine Anordnung gemäß dem Oberbegriff des Anspruchs 1 vorzustellen, die sowohl einen verbesserten Sitzkomfort als auch einen verbesserten Liegekomfort bietet. Die Aufgabe wird gelöst durch die Merkmale des Anspruchs 1. Vorteilhafte Ausführungsformen finden sich in den Unteransprüchen.

Die Anordnung zeichnet sich erfindungsgemäß dadurch aus, dass sie eine Sitzeinrichtung und eine davon getrennte Liegeeinrichtung umfasst und dass die Liegeeinrichtung im Sitzzustand in Längsrichtung gefaltet senkrecht neben der Sitzeinrichtung und im Liegezustand über der Sitzeinrichtung angeordnet ist. Zum Wechseln zwischen dem Sitzzustand und dem Liegezustand wird die Neigung der Lehne der Sitzeinrichtung durch Schwenken der Lehne gegenüber der Sitzfläche geändert und die Liegeeinrichtung von der Position seitlich neben der Sitzeinrichtung in der Position über der Sitzeinrichtung bewegt. Die Angaben oben, unten, seitlich sind auf den Boden der Kabine bezogen.

Indem die Anordnung eine von der Sitzeinrichtung getrennte Liegeeinrichtung umfasst, kann jede der beiden Einrichtung gen für den jeweiligen Einsatzzweck optimal angepasst sein. Die Sitzeinrichtung kann für optimalen Sitzkomfort konturiert sein. Die Liegeeinrichtung kann vollkommen eben sein und zugleich so breit ausgeführt sein, dass ein bequemes Liegen möglich ist. Indem die Liegeeinrichtung im Liegezustand über der Sitzeinrichtung und im Sitzzustand neben der Sitzeinrichtung angeordnet ist, wird der für den Passagier zur Verfügung stehende Platz gut ausgenutzt. In der First Class kommerzieller Linienflugzeuge liegt heute ein gängiger Sitzabstand bei 85" (2,16 m), die einem First Class Passagier zur Verfügung stehende Sitzbreite einschließlich neben dem Sitz- angeordneter Stauräume (gemessen auf der Höhe des Kabinenbodens) beträgt üblicherweise etwa 38" (97 cm). Im Stand der Technik ist auf dieser Grundfläche ein sogenannter Sleepersitz angeordnet, der sich zu einem flachen Bett (mit den genannten Nachteilen) verstellen lässt.

Die Erfindung ermöglicht es, auf der gleichen Grundfläche einen solchen Sitz zu kombinieren mit einer separaten Liegeeinrichtung, die diese Grundfläche zu wesentlichen Teilen als Liegefläche für den Passagier nutzt. Es sind lediglich. Trenneinrichtungen und Sichtblenden zwischen den benachbarten Sitzen vorzusehen, so dass bei einem Sitzabstand von 85" (2,16 m) sich beispielsweise eine Liegefläche mit einer Länge von 78" (1,98 m) ergeben kann. Vorzugsweise beträgt die gesamte Grundfläche der Anordnung nicht mehr als das 1,4-face, weiter vorzugsweise nicht mehr als das 1,3-fache, weiter vorzugsweise nicht mehr als das 1,2-fache der Liegefläche der Liegeeinrichtung im Liegezustand. Die Sitzbreiten üblicher First Class Sitze (einschließlich Armlehnen) liegen in der Regel bei etwa 30" (76 cm). Dies bedeutet, dass neben dem Sitz ein erheblicher Teil der zur Verfügung stehenden Grundfläche (Breite 38" (97 cm)) als Stauraum für die Liegeeinrichtung im Sitzzustand genutzt werden kann. Die Liegeeinrichtung ist im Sitzzustand hochkant neben dem Sitz angeordnet und in Längsrichtung faltbar. Wenn die Liegeeinrichtung im Liegezustand eine Breite von 90 cm aufweist, besitzt sie in Längsrichtung gefaltet und neben dem Sitz im Sitzzustand hochkant senkrecht angeordnet eine Höhe von 45 cm. Sie kann daher innerhalb einer Konsole verstaut werden, deren Oberseite oder Deckel als Ablagefläche neben dem Sitz für den Passagier dient. Vorzugsweise sind die beiden Hälften der Liegeeinrichtung um eine in der Mitte der Liegeeinrichtung in Längsrichtung ausgerichtete Achse gegeneinander klappbar.

Um dem Passagier ein bequemes Einsteigen in die Liegeeinrichtung zu ermöglichen, ist die Liegefläche im Liegezustand vorzugsweise um nicht mehr als 100 cm, weiter vorzugsweise um nicht mehr als 80 cm, weiter vorzugsweise um nicht mehr als 60 cm über dem Kabinenboden angeordnet.

Für einen guten Sitzkomfort erstreckt sich die Sitzeinrichtung im Sitzzustand in eine deutlich größere Höhe über dem Kabinenboden als die Höhe, in der die Liegefläche vorteilhafterweise angeordnet ist. Da die Liegeeinrichtung im Liegezustand über der Sitzeinrichtung angeordnet ist, muss die Sitzeinrichtung beim Übergang vom Sitzzustand in den Liegezustand so verändert werden, dass ihr höchster Punkt unterhalb des Niveaus der Liegefläche angeordnet ist.

Möglich ist es, die Sitzeinrichtung zu diesem Zweck in ihrer Gesamtheit in der Höhe zu verfahren. Es kann jedoch die Höhe der Sitzfläche beibehalten werden, wenn die Lehne so gegenüber der Sitzfläche geschwenkt wird, dass sie um nicht mehr als 20 cm, vorzugsweise um nicht mehr als 10 cm, weiter vorzugsweise um nicht mehr als 5 cm über das Niveau der Sitzfläche hinausragt. Vom Begriff Lehne ist im Rahmen der Erfindung auch eine eventuell vorhandene Kopfstütze umfasst. Das Niveau der Sitzfläche wird durch den Punkt der Sitzfläche bestimmt, der die größte Höhe über dem Kabinenboden hat.

Falls die Sitzeinrichtung eine oder mehrere Armlehnen umfasst, so sind diese im Sitzzustand für ein bequemes Sitzen deutlich oberhalb der Sitzfläche angeordnet. Um die Gesamthöhe der Sitzeinrichtung im Liegezustand so klein wie möglich zu halten, können die Armlehnen beim Wechsel zwischen dem Sitzzustand und dem Liegezustand so in der Höhe verfahren werden, dass sie im Liegezustand um nicht mehr als 10 cm, weiter vorzugsweise um nicht mehr als 5 cm über das Niveau der Sitzfläche hinausragen. Vorzugsweise überschreiten sie das Niveau der Sitzfläche nicht.

Da der Platz an Bord von Flugzeugen begrenzt ist, ist es erstrebenswert, die Liegeeinrichtung im Sitzzustand möglichst raumsparend unterzubringen. Zu diesem Zweck kann die Liegeeinrichtung bei einem Wechsel zwischen dem Liegezustand und dem Sitzzustand um eine in Längsrichtung der Liegeeinrichtung ausgerichtete Achse geschwenkt werden, so dass die Liegeeinrichtung im Sitzzustand senkrecht angeordnet ist.

Weiter kann beim Wechsel zwischen dem Liegezustand und dem Sitzzustand ein Teil der Liegeeinrichtung gegenüber einem anderen Teil der Liegeeinrichtung entlang einer in Längsrichtung der Liegeeinrichtung ausgerichteten Achse geklappt werden, so dass die beiden Teile der Liegeeinrichtung im Sitzzustand Rücken an Rücken zueinander angeordnet sind. Die auf diese Weise zusammengeklappte Liegeeinrichtung nimmt im Sitzzustand nur eine geringe Höhe ein.

Beim Wechsel zwischen den Zuständen kann die Liegeeinrichtung zudem in der Höhe verfahren werden, so dass die Liegeeinrichtung im Sitzzustand nicht über die Höhe der Armlehne der Sitzeinrichtung hinausragt. Dadurch wird es möglich, im Sitzzustand eine Ablagefläche oberhalb der Liegeeinrichtung anzuordnen, die für den auf der Sitzeinrichtung sitzenden Passagier bequem zugänglich ist. Vorzugsweise ist die Ablagefläche zwischen 10 cm und 50 cm oberhalb des Niveaus der Sitzfläche angeordnet. Bevorzugt sind etwa 20 cm.

Damit der Passgier bei verschiedenen Einbauzuständen der erfindungsgemäßen Anordnung bequem liegen kann, kann die Neigung der Liegeeinrichtung in Längsrichtung verstellbar sein, etwa indem sie um eine in Querrichtung der Liegefläche ausgerichtete Achse schwenkbar ausgestaltet ist. Der Verstellbereich beträgt vorteilhafterweise mindestens 3°. Dadurch kann die Liegeeinrichtung so an den Einbauzustand angepasst werden, dass die auf den Passagier einwirkende Kraft senkrecht zur Längsrichtung der Liegefläche wirkt. Dem Passagier wird das Gefühl vermittelt, auf einer waagerechten Fläche zu liegen. Vorteilhafterweise ist die in Querrichtung der Liegefläche ausgerichtete Achse in der Nähe des Kopfendes der Liegefläche angeordnet. Der Kopf des Passagiers bleibt dann in einer konstanten Position relativ zum Flugzeug, auch wenn die Neigung der Liegeeinrichtung geändert wird.

Für einen besseren optischen Eindruck kann die Liegeeinrichtung im Sitzzustand innerhalb eines Gehäuses angeordnet sein. Das Gehäuse kann die oberhalb der Liegeeinrichtung angeordnete Ablagefläche sowie seitliche Wände umfassen. Der Deckel dieses Gehäuses kann im Sitzzustand als Ablagefläche ausgebildet sein und im Liegezustand der Anordnung als Sichtblende oder Teil einer Sichtblende ausgebildet sein. An der Innenseite des Deckels kann eine Leuchte angeordnet sein, die im als Sichtblende aufgestellten Zustand eine Lese- oder Tischleuchte ist.

Vorzugsweise weist die erfindungsgemäße Anordnung an wenigstens drei Seiten Sichtblenden auf. Am Kopf- und Fußende der Anordnung sind diese Sichtblenden vorzugsweise ortsfest ausgebildet, das heißt im Rahmen der üblichen Benutzung der Anordnung durch einen Passagier nicht verstellbar. Diese Sichtblenden können vom Kabinenboden halbhoch ausgebildet sein, beispielsweise etwa 1 m bis 1,50 m hoch. Sie separieren damit die Bereiche der Passagiere voneinander und bieten eine gewisse Privatsphäre.

Bei einer in der First Class in Wide-Body-Flugzeugen üblichen 1-2-1-Sitzanordnung können die am Fenster angeordneten erfindungsgemäßen Anordnungen lediglich zwei Sichtblenden am Kopf und Fußende aufweisen, da die Kabinenwand sie auf der dritten Seite abschirmt. Bei den in der Mitte der Flugzeugkabine jeweils zu zweit nebeneinander positionierten erfindungsgemäßen Anordnungen können zusätzlich Sichtblenden an einer dritten Seite vorhanden sein, die diese beiden Anordnungen zueinander abschirmen. Der Deckel des Gehäuses für die Liegeeinrichtung kann als eine solche Sichtblende oder als ein Teil davon ausgebildet sein.

Die dem Gang zugewandte vierte Seite der Anordnung, von der der Passagier üblicherweise die Anordnung betritt, kann in Teilen eine Sichtblende aufweisen, insbesondere im Bereich des Kopfendes, gegebenenfalls auch im Bereich des Fußendes. Diese Sichtblenden können vorzugsweise verstellbar sein. Am Fußende der Anordnung kann ein Staukasten angeordnet sein, der persönliche Gegenstände des Passagiers aufnehmen kann. Die Oberseite dieses Staukastens kann im Sitzzustand der Anordnung wahlweise als Gästesitz dienen.

Bevorzugt ist es im Rahmen der Erfindung, wenn dieser Staukasten wahlweise sowohl von oben als auch von der Seite her zugänglich ist. Die Liegeeinrichtung ist im Liegezustand oberhalb des Staukastens angeordnet oder liegt gegebenenfalls auf diesem auf. Der Zugang von der Seite ermöglicht dem Passagier somit auch dann Zugriff auf die darin aufgewahrten Gegenstände, wenn sich die Anordnung im Liegezustand befindet. Der Zugang von der Seite kann beispielsweise möglich sein durch Herausziehen eines Schubkastens.

Ohne Mehrbedarf an Platz gegenüber herkömmlichen kombinierten Sitz- und Liegeeinrichtungen kann die im Liegezustand ebene Liegefläche eine Länge von mindestens 190 cm und eine Breite von mindestens 90 cm haben. Für ein bequemes Liegen kann die Liegeeinrichtung eine Matratze umfassen, die mindestens 5 cm, vorzugsweise mindestens 8 cm dick ist. Die Ablagefläche oberhalb der Liegeeinrichtung ist dann so breit, so dass auch größere Gegenstände abgelegt werden können. Um das Klappen der beiden Teile der Liegeeinrichtung gegeneinander zu ermöglichen, kann die Matratze in Längsrichtung geteilt sein. Die Seiten der beiden Matratzenteile, an dem sie im Liegezustand aneinanderstoßen, sollten so gestaltet sein, dass der Spalt zwischen beiden Teilen möglichst klein ist.

Für größeren Bedienkomfort kann die Anordnung eine elektrische Antriebseinrichtung umfassen, mit Hilfe derer die einzelnen Schritte bei einem Wechsel zwischen Liegezustand und Sitzzustand automatisch vollzogen werden.

Im Liegezustand können am Kopfende der Liegeeinrichtung weiterhin eine Leselampe sowie eine weitere Ablagefläche angeordnet sein. Die Anordnung kann ein Fach umfassen, in dem Bettwäsche und ähnliches untergebracht werden können. Dieses Fach ist vorzugsweise hinter der Sitzeinrichtung angeordnet. Außerdem kann die Anordnung einen Monitor umfassen, der vorzugsweise so angeordnet ist, dass er sowohl aus der Sitzposition als auch aus der Liegeposition gut eingesehen werden kann.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Seitenansicht der erfindungsgemäßen Anord- nung im Sitzzustand;
- Fig. 2:: eine Seitenansicht der erfindungsgemäßen Anord- nung im Liegezustand;
- Fig. 3:: die erfindungsgemäße Anordnung im Sitzzustand;
- Fig. 4:: die erfindungsgemäße Anordnung in einem Zwi- schenzustand zwischen Sitzzustand und Liegezu- stand;
- Fig. 5:: die erfindungsgemäße Anordnung in Seitenansicht mit einer geneigten Liegeeinrichtung;
- Fig. 6:: Schematisch in einer Teilschnittansicht von o- ben eine erfindungsgemäße Anordnung;
- Fig. 7:: Schematisch zwei nebeneinander angeordnete er- findungsgemäße Anordnungen;
- Fig. 8:: Die Gruppierung von erfindungsgemäßen Anordnun- gen als First-Class Bestuhlung auf dem Oberdeck einer A 380;
- Fig. 9:: Schematisch eine Aufsicht von oben auf eine er- findungsgemäße Anordnung mit der Darstellung einiger Funktionsmerkmale;
- Fig. 10 und Fig. 11:: Schematisch Querschnitte durch den Staukasten am Fußende der Anordnung.

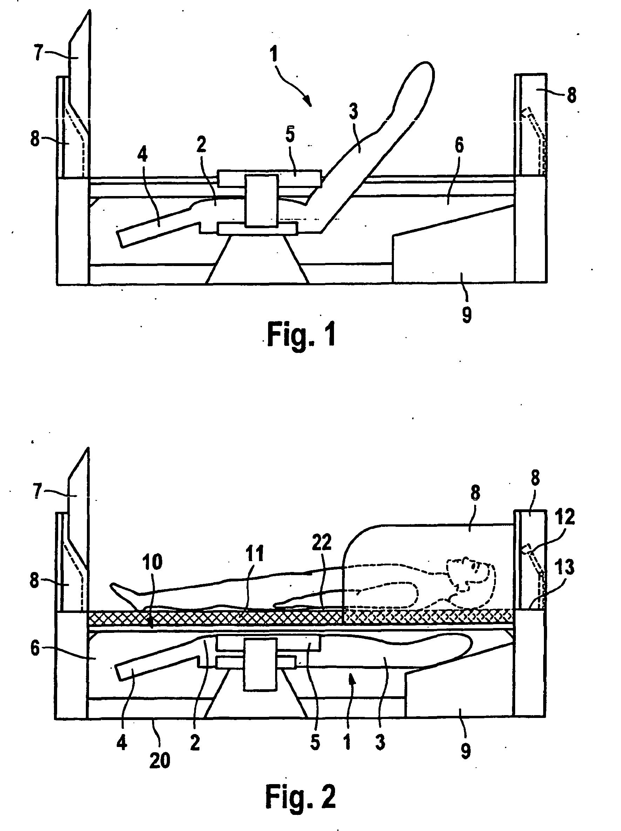

Die Anordnung umfasst in Fig. 1 eine Sitzeinrichtung in Form eines üblichen Flugzeugsitzes 1. Der Sitz 1 umfasst eine Sitzfläche 2, eine Kopfstütze umfassende Lehne 3, eine Fußstütze 4 sowie eine Armlehne 5. Die Lehne 3 und die Fußstütze 4 sind gegenüber der Sitzfläche 2 abgewinkelt, der Sitz 1 ist auf eine bequeme Sitzposition eingestellt. Eine in Figur 1 nicht sichtbare Liegeeinrichtung ist in einem Gehäuse 6 neben dem Sitz 1 verstaut.

Vor dem Sitz 1 in Blickrichtung des Passagiers ist ein Monitor 7 angeordnet. Vor und hinter dem Sitz befinden sich Sichtschutzwände 8. Hinter dem Sitz auf dem Kabinenboden 20 ist ein Fach 9 zum Unterbringen von Bettzeug und ähnlichem gezeigt.

Mit dem auf eine bequeme Sitzposition eingestellten Sitz 1 und der im Gehäuse 6 verstauten Liegeeinrichtung befindet sich die Anordnung im Sitzzustand.

In Fig. 2 ist die Anordnung im Liegezustand. Die Lehne 3 und die Armlehnen 5 des Sitzes 1 sind abgesenkt, so dass der höchste Punkt der Lehne 3 und der höchste Punkt der Armlehne 5 nur leicht über den höchsten Punkt der Sitzfläche 2 hinausragen. Oberhalb des Sitzes 1 ist die zuvor im Gehäuse 6 befindliche Liegeeinrichtung 10 mit einer Matratze 11 ausgebreitet. Die Liege 10 bietet eine vollkommen ebene Liegefläche 22 und ermöglicht ein bequemes Liegen. Am Kopfende der Liege 10 befinden sich eine Leselampe 12 und ein Ablagefach 13. Dem Schutz der Privatsphäre des Passagiers dienen um die Liege 10 herum angebrachte Sichtschutzwände 8. Auch aus der Liegeposition heraus hat der Passagier einen guten Blick auf den Monitor 7.

Dadurch dass der Sitz 1 so eingestellt ist, dass seine höchsten Punkte nur leicht über dem Niveau der Sitzfläche 2 liegen, hat die Liege 10 eine so geringe Höhe über dem Kabinenboden 20, dass sie leicht vom Passagier bestiegen werden kann.

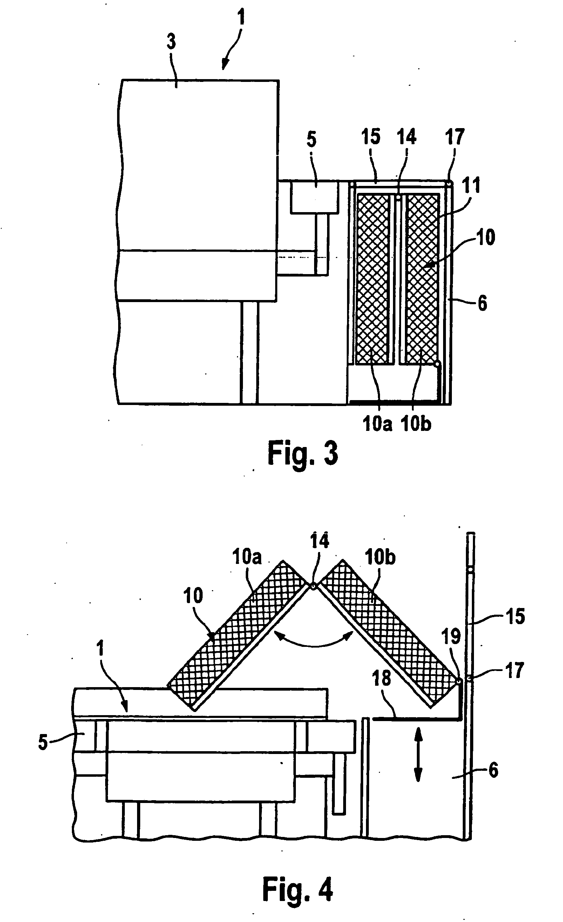

In Fig. 3 ist die Anordnung wieder im Sitzzustand dargestellt. Der Sitz 1 ist aufgerichtet und die Liege 10 ist in neben dem Sitz im Gehäuse 6 zusammengefaltet. Die Liege 10 ist um eine in Längsrichtung der Liege ausgerichtete Achse 14 umgeklappt, so dass zwei Hälften 10a, 10b der Liege 10 Rücken an Rücken aneinander liegen. Die Matratze 11 ist zweigeteilt, so dass mit jedem Teil der Liege 10 jeweils ein Teil der Matratze 11 verbunden ist.

Das Gehäuse 6, in dem die Liege 10 untergebracht ist, besteht aus zwei Seitenwänden und einer oberen Abdeckung, die als Ablagefläche 15 dient. Die Ablagefläche 15 ist auf der gleichen Höhe angeordnet wie die Armlehne 5 des Sitzes 1, so dass der auf dem Sitz 1 sitzende Passagier die Ablagefläche 15 bequem erreichen kann.

Um die Anordnung vom Sitzzustand in den Liegezustand zu bringen, werden zunächst die Lehne 3 und die Armlehnen 5 des Sitzes 1 abgesenkt, so dass der Sitz 1 den in Figur 4 gezeigten Zustand einnimmt. Die oben auf dem Gehäuse 6 befindliche Ablagefläche 15 wird um eine in Längsrichtung der Liege 10 ausgerichtete Achse 17 nach oben geschwenkt, so dass das Gehäuse 6 von oben frei zugänglich ist. Die Liege 10 wird aus dem Gehäuse 6 heraus nach oben gefahren, bis der untere Abschnitt der Aufnahme 18 der Liege 10 sich auf einer Höhe mit der Oberseite des Sitzes 1 befindet. Durch gleichzeitiges Entfalten der beiden Hälften 10a, 10b der Liege 10 um die Achse 14 und Schwenken der Liege 10 um die Achse 19 wird die Liege 10 über dem Sitz 1 ausgebreitet und bildet die ebene Liegefläche. In Figur 4 ist die Liege 10 in einem Zwischenzustand während des Ausfaltens über dem Sitz 1 gezeigt.

Durch die umgekehrte Abfolge von Verfahrensschritten wird die Anordnung vom Liegezustand in den Sitzzustand gebracht.

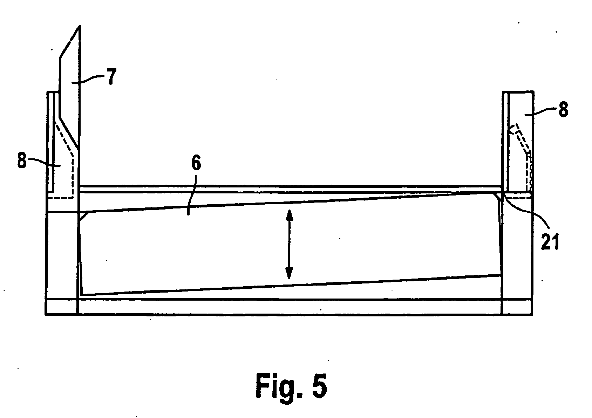

Gemäß Fig. 5 kann die Neigung der Liegeeinrichtung verstellt werden. Im Liegezustand kann die Liege 10 selbst, im Sitzzustand die oberhalb der Liegeeinrichtung angeordnete Ablagefläche 15 so eingestellt werden, dass sie senkrecht zur auf den Passagier wirkenden Kraft steht. Die Achse 21, um die die Liegeeinrichtung geschwenkt wird, ist in der Nähe des Kopfendes der Liege 10 angeordnet.

In dem der Sitz 1 und die Liege 10 voneinander getrennte Einrichtungen sind, können beide auf die speziellen Anforderungen des Liegens bzw. Sitzens abgestimmt sein. Sowohl beim Liegen als auch beim Sitzen wird dem Passagier ein größerer Komfort geboten als bei einer kombinierten Sitz- und Liegeeinrichtung. Weiterhin werden die Entwicklungskosten im Vergleich zu einer kombinierten Sitz- und Liegeeinrichtung reduziert, da auf einen Standardsitz zurückgegriffen werden kann. Ein weiterer Kostenvorteil ergibt sich daraus, dass beim Nachrüsten eines Flugzeugs mit der erfindungsgemäßen Anordnung der existierende Sitz häufig weiterverwendet werden kann.

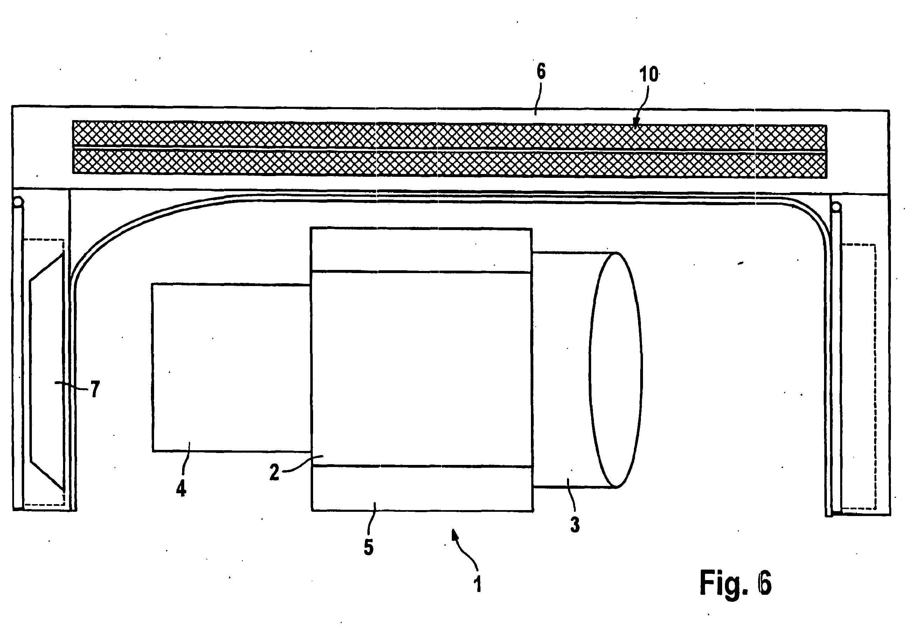

Fig. 6 zeigt in einer Ansicht von oben den Sitz 1 mit der Sitzfläche 2, der Lehne 3, der Fußstütze 4 und den Armlehnen 5. Neben dem Sitz ist eine Konsole bzw. ein Gehäuse 6 angeordnet, in dem die Liegeeinrichtung 10 längs gefaltet und hochkant gestellt aufbewahrt ist.

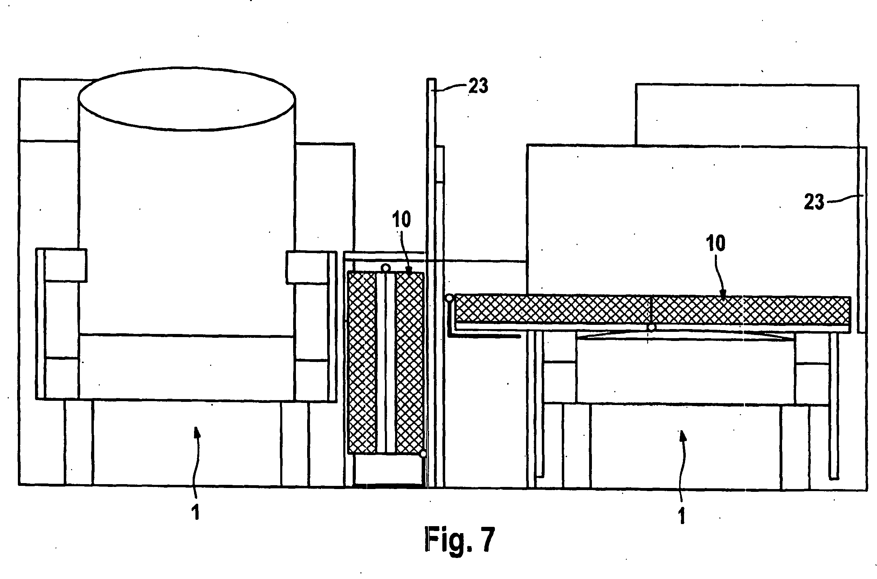

Fig. 7 zeigt zwei nebeneinander angeordnete erfindungsgemäße Anordnungen. Die linke Anordnung befindet sich im Sitzzustand, die Liege 10 ist neben dem Sitz 1 aufgefaltet. Die rechte Anordnung befindet sich im Liegezustand, der Sitz 1 befindet sich flach unterhalb der Liegeeinrichtung 10. Es ist erkennbar, dass die Liegeeinrichtung 10 im Wesentlichen die gesamte Breite der dem Passagier zur Verfügung stehenden Grundfläche einnimmt, so dass ein komfortables Liegen möglich ist. Die Breite der Liegeeinrichtung 10 ist erheblich größer als die der Sitzfläche 2 des Sitzes 1. Die Bezugsziffer 23 bezeichnet Sichtblenden zwischen den Sitzen.

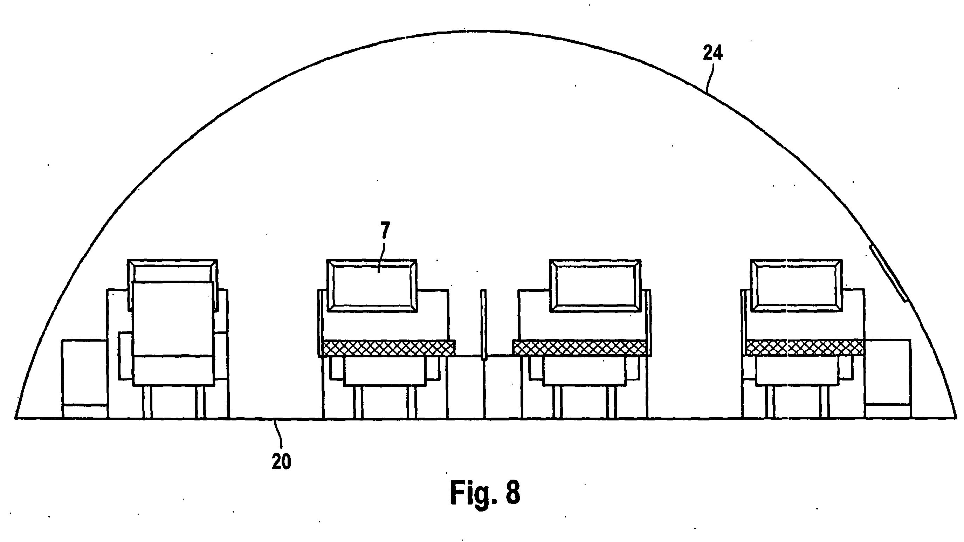

Fig. 8 zeigt schematisch die Gruppierung erfindungsgemäßer Anordnungen auf dem Oberdeck eines Airbus A 380. Man erkennt, dass vier erfindungsgemäße Anordnungen zu einer in der First Class üblichen Sitzkonfiguration 1-2-1 zusammengestellt werden können. Der Platzbedarf entspricht neben einer First Class Konfiguration des Standes der Technik, für den Passagier bietet die erfindungsgemäße Anordnung jedoch einen deutlich höheren Liegekomfort. In Figur 8 bezeichnet di.e Bezugsziffer 23 den Kabinenboden, die Bezugsziffer 24 die Innenseite der Flugzeugaußenhaut.

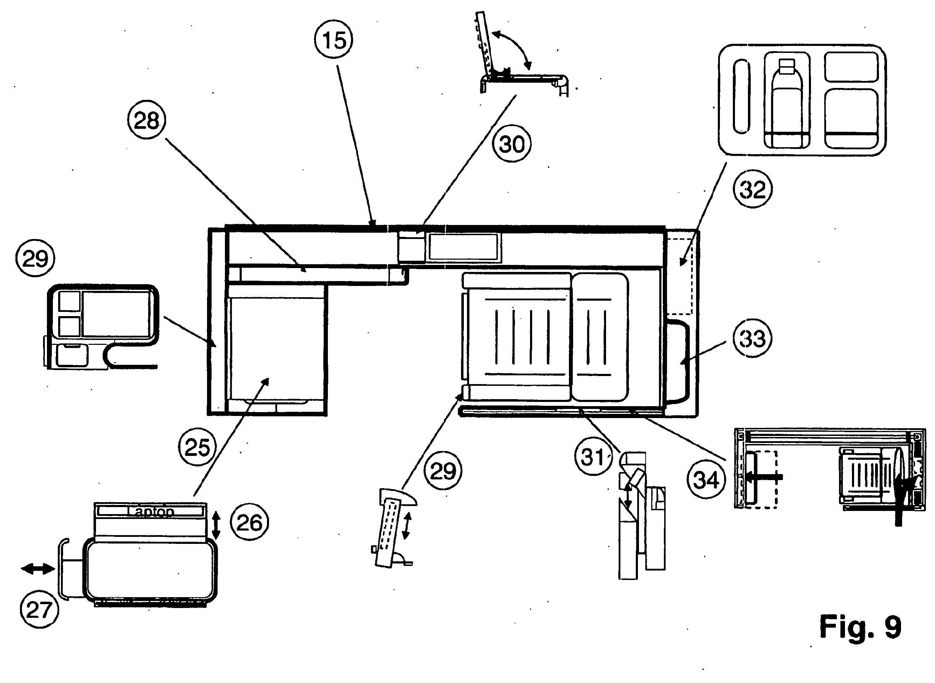

Fig. 9 zeigt schematisch in einer Ansicht von oben eine weitere Ausführungsform der Erfindung mit einigen vorteilhaften Merkmalen. Die Anordnung weist am Fußende einen Staukasten 25 auf. Im Sitzzustand ist dieser wahlweise von oben (angedeutet bei 26) oder von der Seite durch Herausziehen eines Schubkastens (angedeutet bei 27) zugänglich. Ein spezielles Laptopfach zur Aufnahme eines Computers ist vorgesehen. Wenn die Liegeeinrichtung in den Liegezustand verfahren wird, überdeckt diese den Staukasten 25. Eine Zugänglichkeit ist jetzt immer noch gesichert durch den Zugang von der Seite 27.

Die Bezugsziffer 28 bezeichnet einen verstellbaren Falttisch, der im Sitzzustand von dem dargestellten Stauzustand in den Nutzzustand verfahren werden kann.

Die Bezugsziffer 15 bezeichnet den Bettkastendeckel, der gleichzeitig als Sichtschutzblende benutzt werden kann.

In die fußseitige Sichtschutzblende ist eine Bildschirmanordnung 29 integriert, die drei Einzelbildschirme aufweist. Der große Bildschirm dient primär Unterhaltungszwecken, über die beiden kleineren Bildschirme können persönliche oder flugbezogene Informationen wie beispielsweise Anschlussflüge, Anschlussgate, Einreiseinformationen oder dergleichen dargestellt werden.

In einer Armlehne des Sitzes ist ein kleines Staufach 29 für ein Musik- und/oder Videoabspielgerät wie beispielsweise einen ipod^{®} integriert. Anschlüsse zum Verbinden des ipod^{®} mit Audio und/oder Videowiedergabeeinrichtungen sowie gegebenenfalls eine Spannungsversorgung sind vorgesehen.

In den Bettkastendeckel ist eine bei 30 gezeigte Tischleuchte integriert, die im Nutzzustand des Falttisches 28 für dessen Beleuchtung dienen kann.

Auf der in Richtung des Gangs weisenden Zugangsseite der Anordnung ist im Bereich des Kopfendes ein bei 31 angedeuteter, elektrisch nach oben verfahrbarer Sichtschutz vorhanden. In den Sichtschutz ist eine Leseleuchte integriert, die entweder bei der Nutzung der Liegeeinrichtung oder auch im Sitzzustand bei hochgefahrener Sichtblende 31 genutzt werden kann.

Die am Kopfende angeordnete Sichtschutzblende weist zum einen ein bei 32 angedeutetes weiteres Staufach auf. Zum anderen besitzt sie bei 33 einen Rücksprung oder eine Aussparung, die dem Passagier im Liegezustand zusätzliche Kopffreiheit bietet.

Bei 34 ist angedeutet, dass Seitenwände schnell und ohne Werkzeug demontierbar sind, um für Wartungs- und Reparaturzwecke Zugang zu den mechanischen und elektronischen Bauteilen der erfindungsgemäßen Anordnung zu erhalten.

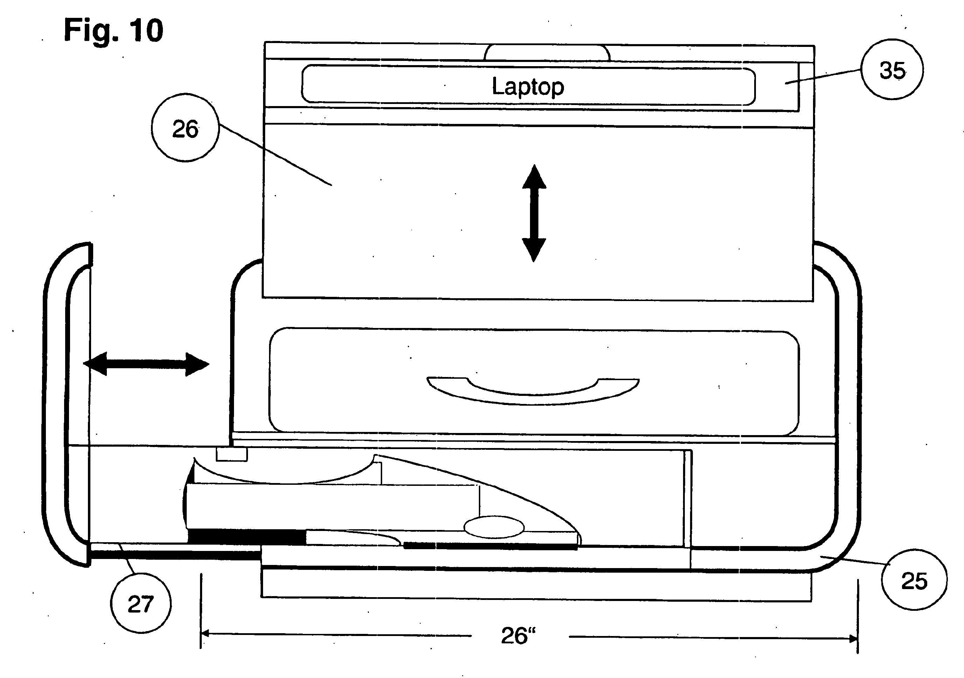

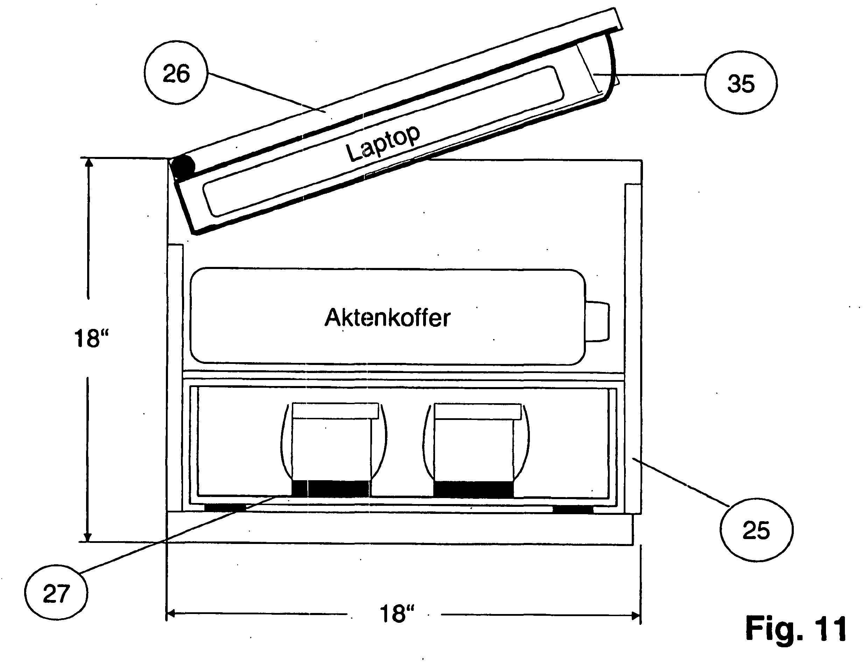

Die Figuren 10 und 11 zeigen den Staukasten 25 am Fußende der erfindungsgemäßen Anordnungen in zwei Querschnitten. Die Figur 10 ist zu erkennen, dass der Staukasten sowohl von der Seite durch Herausziehen einer Schubfachöffnung 27 als auch von oben durch Anheben eines Deckels 26 zugänglich ist. Im Deckel ist zusätzlich ein Fach 35 zur Aufbewahrung eines Laptops integriert. Figur 11 zeigt diesen Staukasten schematisch in einem Schnitt durch eine Ebene senkrecht zu der Schnittebene der Figur 10.

## Patentansprüche

1. Anordnung zum Sitzen und zum Liegen, insbesondere für den Passagierbereich von Flugzeugen, die in einen Sitzzustand und einen Liegezustand bringbar ist, wobei die Anordnung im Sitzzustand eine Sitzfläche (2) und eine Lehne (3) aufweist und im Liegezustand eine Liegefläche (22) aufweist, sowie eine Sitzeinrichtung (1) und eine davon getrennte Liegeeinrichtung (10) umfasst, wobei die Liegeeinrichtung (10) im Liegezustand über der Sitzeinrichtung (1) angeordnet ist, **dadurch gekennzeichnet, dass** die Liegeeinrichtung (10) im Sitzzustand in Längsrichtung gefaltet senkrecht neben der Sitzeinrichtung (1) innerhalb eines Gehäuses (6) angeordnet ist.

2. Anordnung nach Anspruch 1, **dadurch gekennzeichnet, dass** sie im Sitzzustand eine Ablagefläche (15) oberhalb der senkrecht angeordneten und in Längsrichtung gefalteten Liegeeinrichtung (10) aufweist und dass die Ablagefläche zwischen 10 cm und 50 cm oberhalb des Niveaus der Sitzfläche (2) angeordnet ist.

3. Anordnung nach Anspruch 2, **dadurch gekennzeichnet, dass** die Ablagefläche (15) an der Oberseite des Gehäuses (6) angeordnet ist.

4. Anordnung nach einem der Ansprüche 1 bis 3, **dadurch gekennzeichnet, dass** das Gehäuse (6) einen Deckel (15) aufweist, der im Liegezustand der Anordnung als Sichtblende im wesentlichen senkrecht aufgestellt werden kann.

5. Anordnung nach Anspruch 4, **dadurch gekennzeichnet, dass** an der Innenseite des Deckels (15) eine Leuchte angeordnet ist.

6. Anordnung nach einem der Ansprüche 1 bis 5, **dadurch gekennzeichnet, dass** sie an wenigstens zwei Seiten Sichtblenden aufweist.

7. Anordnung nach Anspruch 6, **dadurch gekennzeichnet, dass** die Sichtblenden am Kopf- und Fußende der Anordnung fest sind.

8. Anordnung nach Anspruch 6 oder 7, **dadurch gekennzeichnet, dass** der Deckel (15) des Gehäuses (6) im aufgestellten Zustand eine Sichtblende oder Teil einer Sichtblende ist.

9. Anordnung nach einem der Ansprüche 1 bis 8, **dadurch gekennzeichnet, dass** sie am Fußende einen Staukasten aufweist.

10. Anordnung nach Anspruch 9, **dadurch gekennzeichnet, dass** der Staukasten von oben und von der Seite zugänglich ist.

11. Anordnung nach Anspruch 9 oder 10, **dadurch gekennzeichnet, dass** die Liegeeinrichtung (10) sich im Liegezustand oberhalb des Staukastens befindet.

12. Anordnung nach einem der Ansprüche 1 bis 11, **dadurch gekennzeichnet, dass** ihre Grundfläche nicht mehr als das 1,4 fache, vorzugsweise nicht mehr als das 1,3fache, weiter vorzugsweise nicht mehr als das 1,2fache der Liegefläche (22) der Liegeeinrichtung (10) beträgt.

13. Anordnung nach einem der Ansprüche 1 bis 12, **dadurch gekennzeichnet, dass** die Liegefläche (22) im Liegezustand um nicht mehr als 100 cm, vorzugsweise um nicht mehr als 80 cm, weiter vorzugsweise um nicht mehr als 60 cm über dem Kabinenboden (20) angeordnet ist.

14. Anordnung nach einem der Ansprüche 1 bis 13, **dadurch gekennzeichnet, dass** die Lehne (3) der Sitzeinrichtung (1) im Liegezustand um nicht mehr als 20 cm, vorzugsweise nicht mehr als 10 cm, weiter vorzugsweise nicht mehr als 5 cm über das Niveau der Sitzfläche (2) hinausragt.

15. Anordnung nach einem der Ansprüche 1 bis 14, **dadurch gekennzeichnet, dass** die Sitzeinrichtung (1) eine Armlehne (5) umfasst und dass die Armlehne (5) im Liegezustand um nicht mehr als 10 cm, vorzugsweise um nicht mehr als 5 cm über das Niveau der Sitzfläche (2) hinausragt.

16. Anordnung nach Anspruch 15, **dadurch gekennzeichnet, dass** im Sitzzustand ein Teil (10a) der Liegeeinrichtung (10) gegenüber einem anderen Teil (10b) der Liegeeinrichtung (10) um eine in Längsrichtung der Liegeeinrichtung ausgerichtete Achse (14) umgeklappt ist.

17. Anordnung nach einem der Ansprüche 1 bis 16, **dadurch gekennzeichnet, dass** die Liegefläche (22) im Liegezustand eben ist und eine Länge von mindestens 190 cm und eine Breite von mindestens 70 cm vorzugsweise mindestens 80 cm, weiter vorzugsweise mindestens 90 cm aufweist.

18. Anordnung nach einem der Ansprüche 1 bis 17, **dadurch gekennzeichnet, dass** die Liegeeinrichtung (10) eine Matratze (11) umfasst und dass die Matratze (11) mindestens 5 cm, vorzugsweise mindestens 8 cm dick ist.

19. Anordnung nach Anspruch 18, **dadurch gekennzeichnet, dass** die Matratze (11) in Längsrichtung geteilt ist.

20. Anordnung nach einem der Ansprüche 1 bis 19, **dadurch gekennzeichnet, dass** die Neigung der Liegeeinrichtung (10) in Längsrichtung verstellbar ist.

21. Anordnung nach einem der Ansprüche 1 bis 20, **dadurch gekennzeichnet, dass** sie eine elektrische Antriebseinrichtung für den Wechsel zwischen dem Sitzzustand und dem Liegezustand umfasst.

## Claims

1. Seating and lie-flat arrangement, in particular for the passenger area of aircraft, which is movable into a seating state and a lie-flat state, wherein the arrangement in the seating state comprises a squab (2) and a backrest (3) and in the lie-flat state comprises a lie-flat surface (22), and comprises a seating device (1) and a lie-flat device (10) that is separate therefrom, wherein the lie-flat device (10) in the lie-flat state is disposed above the seating device (1), **characterized in that** the lie-flat device (10) in the seating state is arranged folded in longitudinal direction vertically alongside the seating device (1) inside a housing (6).

2. Arrangement according to claim 1, **characterized in that** in the seating state it comprises a shelf (15) above the vertically disposed, longitudinally folded lie-flat device (10) and that the shelf is disposed between 10 cm and 50 cm above the level of the squab (2).

3. Arrangement according to claim 2, **characterized in that** the shelf (15) is disposed at the top of the housing (6).

4. Arrangement according to one of claims 1 to 3, **characterized in that** the housing (6) comprises a lid (15), which in the lie-flat state of the arrangement may be set up substantially vertically as a privacy screen.

5. Arrangement according to claim 4, **characterized in that** a light fitting is disposed on the inside of the lid (15).

6. Arrangement according to one of claims 1 to 5, **characterized in that** it comprises privacy screens at at least two sides.

7. Arrangement according to claim 6, **characterized in that** the privacy screens are fixed to the head- and foot end of the arrangement.

8. Arrangement according to claim 6 or 7, **characterized in that** the lid (15) of the housing (6) in the set-up state is a privacy screen or part of a privacy screen.

9. Arrangement according to one of claims 1 to 8, **characterized in that** it comprises a stowage box at the foot end.

10. Arrangement according to claim 9, **characterized in that** the stowage box is accessible from above and from the side.

11. Arrangement according to claim 9 or 10, **characterized in that** the lie-flat device (10) in the lie-flat state is situated above the stowage box.

12. Arrangement according to one of claims 1 to 11, **characterized in that** its base is not more than 1.4 times, preferably not more than 1.3 times, more preferably not more than 1.2 times the lie-flat surface (22) of the lie-flat device (10).

13. Arrangement according to one of claims 1 to 12, **characterized in that** the lie-flat surface (22) in the lie-flat state is disposed not more than 100 cm, preferably not more than 80 cm, more preferably not more than 60 cm above the cabin floor (20).

14. Arrangement according to one of claims 1 to 13, **characterized in that** the backrest (3) of the seating device (1) in the lie-flat state projects not more than 20 cm, preferably not more than 10 cm, more preferably not more than 5 cm above the level of the squab (2).

15. Arrangement according to one of claims 1 to 14, **characterized in that** the seating device (1) comprises an armrest (5) and that the armrest (5) in the lie-flat state projects not more than 10 cm, preferably not more than 5 cm above the level of the squab (2).

16. Arrangement according to claim 15, **characterized in that** in the seating state one part (10a) of the lie-flat device (10) is folded relative to another part (10b) of the lie-flat device (10) about an axis (14) oriented in longitudinal direction of the lie-flat device.

17. Arrangement according to one of claims 1 to 16, **characterized in that** the lie-flat surface (22) in the lie-flat state is flat and has a length of at least 190 cm and a width of at least 70 cm, preferably at least 80 cm, more preferably at least 90 cm.

18. Arrangement according to one of claims 1 to 17, **characterized in that** the lie-flat device (10) comprises a mattress (11) and that the mattress (11) is at least 5 cm, preferably at least 8 cm thick.

19. Arrangement according to claim 18, **characterized in that** the mattress (11) is divided in longitudinal direction.

20. Arrangement according to one of claims 1 to 19, **characterized in that** the inclination of the lie-flat device (10) is adjustable in longitudinal direction.

21. Arrangement according to one of claims 1 to 20, **characterized in that** it comprises an electric drive device for the changeover between the seating state and the lie-flat state.

## Revendications

1. Dispositif de siège et de couchage, en particulier pour la zone passagers des avions, lequel peut être amené en position de siège et en position de couchage, le dispositif comportant une assise (2) et un dossier (3) dans la position de siège, et une surface de couchage (22) dans la position de couchage, et comprenant un système de siège (1) et un système de couchage (10) séparé de celui-ci, sachant que, dans la position de couchage, le système de couchage (10) est disposé au-dessus du système de siège (1), **caractérisé en ce que**, dans la position de siège, le système de couchage (10) est plié dans le sens longitudinal et disposé verticalement à côté du système de siège (1) à l'intérieur d'un caisson (6).

2. Dispositif selon la revendication 1, **caractérisé en ce qu'**il comporte, dans la position de siège, une surface de rangement (15) au-dessus du système de couchage (10) disposé verticalement et plié dans le sens longitudinal, et **en ce que** la surface de rangement est disposée entre 10 cm et 50 cm au-dessus du niveau de l'assise (2).

3. Dispositif selon la revendication 2, **caractérisé en ce que** la surface de rangement (15) est disposée sur le côté supérieur du caisson (6).

4. Dispositif selon l'une quelconque des revendications 1 à 3, **caractérisé en ce que** le caisson (6) comporte un couvercle (15) qui, dans la position de couchage du dispositif, peut être redressé sensiblement verticalement sous forme de paravent.

5. Dispositif selon la revendication 4, **caractérisé en ce qu'**une lampe est agencée sur la face intérieure du couvercle (15).

6. Dispositif selon l'une quelconque des revendications 1 à 5, **caractérisé en ce qu'**il comporte des paravents sur au moins deux côtés.

7. Dispositif selon la revendication 6, **caractérisé en ce que** les paravents sont fixes à la tête et au pied du dispositif.

8. Dispositif selon la revendication 6 ou 7, **caractérisé en ce que** le couvercle (15) du caisson (6), dans la position redressée, forme un paravent ou une partie d'un paravent.

9. Dispositif selon l'une quelconque des revendications 1 à 8, **caractérisé en ce qu'**il comporte un casier de rangement au niveau du pied.

10. Dispositif selon la revendication 9, **caractérisé en ce que** le casier de rangement est accessible par le haut et par le côté.

11. Dispositif selon la revendication 9 ou 10, **caractérisé en ce que** le système de couchage (10), dans la position de couchage, est situé au-dessus du casier de rangement.

12. dispositif selon l'une quelconque des revendications 1 à 11, **caractérisé en ce que** sa surface de base n'est pas supérieure à 1,4 fois, de préférence n'est pas supérieure à 1,3 fois, encore mieux n'est pas supérieure à 1,2 fois la surface de couchage (22) du système de couchage (10).

13. Dispositif selon l'une quelconque des revendications 1 à 12, **caractérisé en ce que** la surface de couchage (22), dans la position de couchage, n'est pas disposée à plus de 100 cm, de préférence n'est pas disposée à plus de 80 cm, encore mieux n'est pas disposée à plus de 60 cm au-dessus du sol (20) de la cabine.

14. Dispositif selon l'une quelconque des revendications 1 à 13, **caractérisé en ce que**, dans la position de couchage, le dossier (3) du système de siège (1) ne s'avance pas au-delà du niveau de l'assise (2) sur plus de 20 cm, de préférence sur plus de 10 cm, encore mieux sur plus de 5 cm.

15. Dispositif selon l'une quelconque des revendications 1 à 14, **caractérisé en ce que** le système de siège (1) comporte un accoudoir (5) et **en ce que**, dans la position de couchage, l'accoudoir (5) ne s'avance pas au-delà du niveau de l'assise (2) sur plus de 10 cm, de préférence sur plus de 5 cm.

16. Dispositif selon la revendication 15, **caractérisé en ce que**, dans la position de siège, une partie (10a) du système de couchage (10) est repliée par rapport à une autre partie (10b) du système de couchage (10) autour d'un axe (14) orienté dans le sens longitudinal du système de couchage.

17. Dispositif selon l'une quelconque des revendications 1 à 16, **caractérisé en ce que** la surface de couchage (22) est plane dans la position de couchage et possède une longueur d'au moins 190 cm et une largeur d'au moins 70 cm, de préférence d'au moins 80 cm, encore mieux d'au moins 90 cm.

18. Dispositif selon l'une quelconque des revendications 1 à 17, **caractérisé en ce que** le système de couchage (10) comporte un matelas (11) et **en ce que** le matelas (11) a une épaisseur d'au moins 5 cm, de préférence d'au moins 8 cm.

19. Dispositif selon la revendication 18, **caractérisé en ce que** le matelas (11) est divisé dans le sens longitudinal.

20. Dispositif selon l'une quelconque des revendications 1 à 19, **caractérisé en ce que** l'inclinaison du système de couchage (10) est réglable dans le sens longitudinal.

21. Dispositif selon l'une quelconque des revendications 1 à 20, **caractérisé en ce qu'**il comprend un dispositif d'actionnement électrique pour permuter entre la position de siège et la position de couchage.
